# EUROPÄISCHE PATENTANMELDUNG

(11) **EP 4 733 033 A1**
(43) Veröffentlichungstag der Anmeldung: **29.04.2026**
(21) Anmeldenummer: 25210309.8
(22) Anmeldetag: 22.10.2025
(51) Int. Cl.: B29C 45/07, B29C 45/17, B29C 45/50

(54) **SPRITZGIESSEINHEIT ZUR VERARBEITUNG VON KUNSTSTOFFEN, DAMIT VERSEHENE SPRITZGIESSMASCHINE SOWIE ZUGEHÖRIGER BAUSATZ**

(30) Priorität: 25.10.2024 DE 102024131207
(71) Anmelder: ARBURG GmbH + Co KG, 72290 Loßburg (DE)
(72) Erfinder: SCHILLI, Christoph, 77781 Biberach (DE); BLETSCHER, Rainer, 72270 Baiersbronn (DE)
(74) Vertreter: RPK Patenanwälte Reinhardt und Kaufmann Partnerschaft mbB (Pforzheim)

(57) **Zusammenfassung**

Eine Spritzgießeinheit zur Verarbeitung von Kunststoffen umfasst ein Aufnahmegehäuse (40), mehreren am Aufnahmegehäuse (40) gelagerte Führungselementen (64), mindestens eine an einem Aufnahmeelement (42) gelagerte Dosiereinheit (U) und mindestens eine Einspritzeinheit (E). Ein mit der Spritzgießeinheit (15) bewegbares Abstützelement (68) stützt die Spritzgießeinheit (15) ab. Aufnahmeelement (42) und Dosiereinheit (U) mit ihrem Dosierantrieb (62) sowie Abstützelement (68) und Einspritzeinheit (E) mit ihrem Einspritzantrieb (66) bilden jeweils modular austauschbare Funktionseinheiten. Das Aufnahmegehäuse (40) und die Führungselemente (64) bilden eine Montageplattform, wobei das Aufnahmeelement (42) auf die Führungselemente (64) aufgeschoben ist. Montageplattform und Abstützelement (58) bilden einen Kraftrahmen, wobei das Abstützelement (56) am Ende der Führungselemente (64) lösbar befestigt ist. Antriebsgleiche oder antriebsverschiedene Dosiereinheiten (U) und Einspritzeinheiten (E) der modular austauschbaren Funktionseinheiten sind an Schnittstellen (50) der Spritzgießeinheit angebunden.

## Beschreibung

Die vorliegende Erfindung betrifft eine Spritzgießeinheit zur Verarbeitung von Kunststoffen oder anderer plastifizierbarer Materialien, eingerichtet zum Einspritzen von plastifiziertem Material in einen Formhohlraum zur Herstellung von Spritzteilen mit den Merkmalen des Oberbegriffs des Anspruch 1, eine damit versehene Spritzgießmaschine mit den Merkmalen des Anspruches 9 sowie einen Bausatz für eine Spritzgießeinheit mit den Merkmalen des Anspruches 10.

Der Begriff "plastifizierbares Material", wie er hier verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Recyclate.

Der Begriff "Funktionseinheit", wie er hier verwendet wird, betrifft Einheiten, die dazu eingerichtet sind, Funktionen an einer Spritzgießeinheit einer Spritzgießmaschine auszuführen. Dabei handelt es sich insbesondere um eine Dosiereinheit, die während des Spritzgießvorgang plastifiziertes Material vor das Fördermittel, wie z.B. eine Förderschnecke, aufdosiert, das anschließend in einem Einspritzvorgang eingespritzt wird, eine Einspritzeinheit, die durch eine Axialbewegung des Fördermittels, wie z.B. einer Förderschnecke, das Material in den Formhohlraum einer Spritzgießform einspritzt, eine Düsenfahreinheit, die dazu eingerichtet ist, die Düse der Spritzgießeinheit an eine Einspritzöffnung der Spritzgießform anzulegen, oder auch eine Düsenverschlusseinheit bei Verwendung einer Verschlussdüse. Grundsätzlich können auch andere Funktionseinheiten an einer Spritzgießmaschine vorgesehen sein, die von der Erfindung umfasst sind.

Die Begriffe "antriebsgleich" bzw. "antriebsverschieden", wie sie hier verwendet werden, beziehen sich auf das Prinzip des Antriebs, also darauf, ob der Antrieb z.B. hydraulisch, pneumatisch, elektromechanisch, ein magnetisch wirkender Linearantrieb oder in einer Hybridfunktion von wenigstens zwei der vorgenannten Wirkarten betrieben wird. Antriebsgleich sind Funktionseinheiten, wenn sie mit dem gleichen Wirkprinzip betätigt werden, antriebsverschieden sind sie, wenn sie mit verschiedenen Wirkprinzipien betätigt werden.

Herkömmliche Spritzgießmaschinen zur Verarbeitung von Kunststoffen und anderer plastifizierbarer Materialien umfassen z. B. Formschließeinheiten aber auch Spritzgießeinheiten mit prozessrelevanten Modulen wie z.B. der Plastifizierung und der Granulatzuführung. Diese Spritzgießeinheiten sind auch funktionell in zwei Funktionseinheiten aufteilbar, mit denen der Plastifizier- und Einspritzprozeß abbildbar ist. Es handelt sich hierbei um das Plastifizieren und Fördern von plastifizierbarem Material, wie z.B. Kunststoffgranulat, im Plastifizierzylinder (Aufdosieren) mittels einer Dosiereinheit mit einem Dosierantrieb und das nachgelagerte Einspritzen in die Werkzeugkavität, d.h. in einen Formhohlraum einer Spritzgießform mittels einer Einspritzeinheit mit einem Einspritzantrieb.

Diese Funktionseinheiten einer Spritzgießeinheit gibt es heute im Wesentlichen in vier technischen Ausprägungen, als hydraulische, pneumatische, elektrische oder hybride Einheit, wobei letztere verschiedene Antriebarten nebeneinander aufweist. Auf magnetischen Wirkprinzipien beruhende Linearantriebe werden gelegentlich auch verwendet. Die Funktionseinheiten sind in der Ausgestaltung so unterschiedlich, dass ein Austausch nur schwer möglich ist. Sowohl die Erstmontage als auch der Servicefall erfordert einen individuellen und komplexen Montageaufwand und häufig können die unterschiedlichen Ausprägungen nicht auf ein und derselben Maschinenbasis montiert werden. Speziell im Servicefall kommt es beim Ausfall der Funktionseinheit häufig zu erheblichen Betriebsausfallzeiten, um die defekten Komponenten vor Ort zu tauschen oder zu reparieren.

Ein Beispiel für einen ersten Ansatz zur Lösung der Probleme ist in der WO 00/21729 A1 offenbart. Dabei wird bei einer Spritzgießmaschine mit mehreren modularen Antriebsgruppen auf der Spritzgießseite und auf der Formschlussseite wenigstens eine der Antriebsgruppen über wenigstens ein Multifunktionselement mit der Spritzgießmaschine verbunden, das als Schnittstelle wahlweise den Anschluss verschiedener Antriebsarten wie z.B. elektromechanische Antriebe, hydraulische Antriebe, pneumatische Antriebe, Linearmotoren oder elektromagnetische Antriebe als Antriebsgruppe bei ansonsten unveränderter Spritzgießmaschine ermöglicht. Unabhängig vom jeweiligen Antrieb wird an der Spritzgießmaschine ausreichend Raum für die jeweils verwendeten Antriebsgruppen zur Unterbringung jeder Antriebsart zur Verfügung gestellt. Dadurch werden die baulichen Voraussetzungen für eine erhöhte Modularität unter Einsatz weitestgehend identischer Bauteile geschaffen.

Doch löst auch dieser Ansatz die Probleme nicht vollständig zufriedenstellend. Die uneinheitliche Maschinenbasis und die fehlende Wechselmöglichkeit sind in der heute gängigen Praxis nach wie vor dafür verantwortlich, dass defekte Funktionseinheiten nicht einfach und schnell als komplette Einheit gewechselt werden können. Weiterhin ist durch die fehlende Gleichheit der Schnittstellen zur Spritzgießeinheit bzw. der Maschinenbasis ein Umbau auf andere Technologien beim Kunden über die Lebensdauer hinweg erschwert und wird somit heute kaum bis gar nicht praktiziert.

Der Erfindung liegt daher die Aufgabe zugrunde, eine einheitliche Maschinenbasis und Schnittstelle für modular austauschbare Funktionseinheiten einer Spritzgießeinheit bzw. Spritzgießmaschine anzugeben sowie einen Bausatz dafür bereitzustellen, die einen einfachen Austausch der Funktionseinheiten und ebenso einfachen Wechsel des Antriebskonzepts der Funktionseinheiten ermöglichen.

Dies wird durch eine Spritzgießeinheit zur Verarbeitung von Kunststoffen oder anderer plastifizierbarer Materialien mit den Merkmalen des Anspruches 1, durch eine Spritzgießmaschine mit den Merkmalen des Anspruches 9 sowie durch einen Bausatz mit den Merkmalen des Anspruches 10 gelöst.

Die Spritzgießeinheit hat dazu ein Aufnahmegehäuse, das zum Aufnehmen eines Plastifizierzylinders und zum Abstützen der Spritzgießeinheit auf einem Unterbau eingerichtet ist. Am Aufnahmegehäuse sind mehrere Führungselementen gelagert. Ein Aufnahmeelement ist an den Führungselementen axial beweglich gelagert. Dosiereinheit und Einspritzeinheit sind getrennt voneinander in der Spritzgießeinheit vorgesehen. Mindestens eine Dosiereinheit ist am Aufnahmeelement gelagert und dazu eingerichtet, plastifiziertes Material zum Einspritzen zu dosieren. Mindestens eine Einspritzeinheit ist einem Abstützelement zugeordnet und dazu eingerichtet ist, durch eine an den Führungselementen geführte Axialbewegung plastifiziertes Material einzuspritzen. Das Abstützelement ist mit der Spritzgießeinheit bewegbar und zum Abstützen der Spritzgießeinheit auf dem Unterbau eingerichtet. Aufnahmeelement und Dosiereinheit mit ihrem Dosierantrieb bilden eine modular austauschbare Funktionseinheit. Abstützelement und Einspritzeinheit mit ihrem Einspritzantrieb bilden ebenfalls eine modular austauschbare Funktionseinheit. Das Aufnahmegehäuse und die Führungselemente formen eine Montageplattform, wobei das Aufnahmeelement auf die Führungselemente aufgeschoben werden kann. Die Montageplattform, also Aufnahmegehäuse und Führungselemente sowie das Abstützelement bilden einen Kraftrahmen, insbesondere für die Einspritzkräfte. Das Abstützelement ist am dem Plastifizierzylinder gegenüberliegenden Ende der Führungselemente lösbar befestigt, insbesondere auf die Führungselemente aufsteckbar und dazu eingerichtet ist die Spritzgießeinheit auf dem Unterbau abzustützen. Antriebsgleiche oder antriebsverschiedene Dosiereinheiten und Einspritzeinheiten der modular austauschbaren Funktionseinheiten sind an Schnittstellen der Spritzgießeinheit angebunden.

Durch die Ausgestaltung von gesonderten modular austauschbaren Funktionseinheiten, insbesondere für die Dosiereinheit einerseits und die Einspritzeinheit andererseits, können diese in Verbindung mit der konstruktiven Ausgestaltung der Maschinenbasis vorteilhaft leicht, schnell und mit wenig Aufwand ausgetauscht, ersetzt oder zu Wartungszwecken abgenommen werden. Die die Dosiereinheit umfassende Funktionseinheit wird lediglich auf die Führungselemente "aufgefädelt". Die die Einspritzeinheit umfassende Funktionseinheit wird vorzugsweise am Ende der Führungselemente lösbar befestigt bzw. aufgesteckt und kann durch Lösen der Befestigung auch einfach wieder freigesetzt werden. Gleichzeitig schließt diese dem Abstützelement zugeordnete Funktionseinheit den Kraftrahmen für die Einspritzeinheit.

Vorteilhaft werden dadurch die baulichen Voraussetzungen für eine Vereinheitlichung der Schnittstellen zum einfachen Austausch der Funktionseinheiten an einer Spritzgießeinheit geschaffen. Ausgehend vom Aufnahmegehäuse werden die Führungselemente als einheitliche Aufnahme für die verschiedenen Funktionseinheiten vorgesehen. Dem Aufnahmegehäuse zugewandt wird die als Funktionseinheit ausgebildete Dosiereinheit mit dem vorzugsweise in einer Plastifiziereinheit angeordneten Fördermittel, wie z.B. einer Förderschnecke, verbunden, um die Plastifizierung zu realisieren. Der Antrieb dieser Funktionseinheit kann bei gleicher technischer Ausprägung z.B. elektrisch oder hydraulisch erfolgen.

Durch die Trennung von Einspritzeinheit und Dosiereinheit als auch der zugeordneten Antriebe ist die Schnittstelle für das Ankoppeln der Einspritzeinheit für die Einspritzfunktion unabhängig vom Antriebskonzept der Dosiereinheit , z.B. hydraulisch über einen Kolben oder elektromechanisch z.B. über eine Kugelgewindespindel, einen Planetenrollgewindeantrieb, eine Zahnstange oder dergleichen.

Zudem ist es erforderlich, dass die von der als Funktionseinheit ausgebildeten Einspritzeinheit eingeleitete Einspritzkraft in der Spritzgießeinheit gegengehalten wird. Dies wird technisch durch die Ausgestaltung des Kraftrahmen mittels des hinteren Abstützelements umgesetzt. Auch hier ist vorteilhaft die wenigstens eine Schnittstelle so ausgebildet, dass über eine einheitliche Verbindungstechnik antriebsgleiche oder auch antriebsverschiedene Funktionseinheiten austauschbar angeschlossen werden können.

Vorzugsweise ist die modular austauschbare Funktionseinheit mittels eines vorzugsweise ebenfalls als Schnittstelle ausgebildeten Schnellkopplungssystems an der mindestens einen Schnittstelle wirkverbunden in die Spritzgießeinheit integriert. Dies gestattet vorteilhaft neben einem einfachen und schnellen Montageprozess auch im Servicefall einen effizienten und kundenfreundlichen Austausch von Bauteilen, vorzugsweise der gesamten Funktionseinheit, die dadurch getauscht werden kann, um eine schnelle Wartung und weitere Verfügbarkeit der Spritzgießmaschine für den Kunden zu gewährleisten.

Vorteilhaft lässt sich durch die Vereinheitlichung von Schnittstellen im Montageprozess trotz unterschiedlicher Varianten eine effiziente Montage auf einer Montagelinie realisieren, das heißt, es kann im Fügeprozess, bei dem die Funktionseinheiten mit der Spritzgießeinheit "verheiratet werden", individuell auf Kundenanforderungen eingegangen werden. Zudem kann durch den Modulgedanken vorteilhaft im Lebenszyklus der Spritzgießmaschine je nach wechselnden Anforderungen eine einfache Umrüstung von Funktionseinheiten beim Kunden zwischen unterschiedlichen Antriebsarten umgesetzt werden.

Vorzugsweise sind die austauschbaren Funktionseinheiten auf Grundlage wenigstens eines der Wirkprinzipien hydraulisch, pneumatisch, elektromechanisch, Linearantrieb oder hybrid betätigbar. Vorteilhaft kann dadurch je nach Einsatzzweck oder Kundenwunsch auf das geeignete Wirkprinzip eingegangen werden.

Das Schnellkopplungssystem wird vorzugsweise durch alternative Ausführungsformen umgesetzt. So kann eine zentrale Schraube, eine Klemmung über eine geschlitzte Gussbohrung, eine zentrale Mutter mit Gewindeeinstellring, eine Vielzahl von im Gebrauchszustand auf Druck beanspruchten Verbindungselementen mit Gewindeeinstellring, ein Bajonettverschluss oder ein Gewindespannring mit axialem Anschraublochkreis verwendet werden, was vorteilhaft die Möglichkeiten der technischen Ausgestaltung in Abhängigkeit vom jeweiligen Einsatzzweck erhöht.

In einer bevorzugten, vorteilhaft die Übertragung aller Bewegungsrichtungen ermöglichenden Ausführungsform der modular austauschbaren Funktionseinheit ist mittels der mindestens einen Schnittstelle eine rotatorische und/oder translatorische Bewegung übertragbar.

Vorzugsweise ist bei einer im Hinblick auf den Einsatzzweck einer Funktionseinheit und das damit verbunden optimale Antriebskonzept vorteilhaft abgestimmten Ausführungsform der austauschbaren Funktionseinheit eine Antriebskraft der rotatorischen und/oder translatorischen Bewegung mittels einer Kolben-Zylinder-Einheit und/oder elektromechanischen Einheit wie einer Kugelgewindespindel einer Bewegungsspindel oder einer Zahnstangenlösung erzeugbar.

Bevorzugterweise können die Dosiereinheit und die Einspritzeinheit so eingesetzt werden, dass sie die Grundprinzipien eines Spritzgießprozesses abbilden. In diesem Fall ist die Dosiereinheit dazu eingerichtet, das Plastifizieren und Fördern des plastifizierten Materials in einem Plastifizierzylinder mit einer Förderschnecke auszuführen, und die Einspritzeinheit ist dazu eingerichtet, das Einspritzen des plastifizierten Materials in einen Formhohlraum einer Spritzgießform, aufgenommen in einer Spritzgießmaschine auszuführen. Durch die Schnittstellen sind die Dosiereinheit und die Einspritzeinheit zu diesem Zweck in Wirkverbindung.

Vorzugsweise ist an einer der Schnittstellen, vorzugweise an der dem hinteren Abstützelement zugeordneten Schnittstelle der Einspritzeinheit, eine Gewindeanschlagmutter im Doppelmutterprinzip vorgesehen. Dadurch kann vorteilhaft im Montageprozess über eine Einstellfunktion eine hohe Genauigkeit hinsichtlich der Parallelität erreicht werden, ohne die Fertigungsgenauigkeit und somit die Herstellkosten signifikant zu erhöhen. Die Einstellsystematik lässt sich zudem technisch vorteilhaft so ausführen, dass ohne großen, insbesondere finanziellen Mehraufwand eine variable Erhöhung des Einspritzhubs umgesetzt werden kann. Dadurch lässt sich vorteilhaft die Leistung bzw. der Massedurchsatz erhöhen, um dadurch die Spritzgießeinheit einem neuen Leistungsspektrum nach der Euromap-Bewertung zuzuführen. Über diese Doppelmuttervariante lässt sich vorteilhaft der Einspritzhub der Spritzgießeinheit in gewissen Grenzen einfach anpassen, z.B. von einem Einspritzhub, der dem vierfachen Schneckendurchmesser entspricht, auf einen Einspritzhub, der dem fünffachen Schneckendurchmesser entspricht.

Wird eine Spritzgießmaschine mit einer derartigen Spritzgießeinheit ausgestattet, ergeben sich die zuvor für die Spritzgießeinheit genannten Vorteile, was vorteilhaft auch die Leistungsmerkmale der gesamten Spritzgießmaschine positiv beeinflusst.

Die Spritzgießeinheit kann vorteilhaft aus einem Bausatz aufgebaut werden, der bei der Erstmontage aber auch während des Lebenszyklus der Maschine eine hohe Flexibilität und Anpassungsfähigkeit z.B. an sich ändernde Anforderungen der Kunden oder bei der Herstellung von Spritzteilen gewährleistet. Solch ein Bausatz umfasst im Wesentlichen:
- ein Aufnahmegehäuse,
- mehrere Führungselementen,
- eine Vielzahl von Aufnahmeelementen, wobei das Aufnahmeelement an den Führungselementen axial beweglich lagerbar ist,
- eine Vielzahl von Dosiereinheiten mit zugehörigem Dosierantrieb,
- eine Vielzahl von Einspritzeinheiten mit zugehörigem Einspritzantrieb,
- eine Vielzahl von Abstützelementen,

Aufnahmeelement und Dosiereinheit mit ihrem Dosierantrieb bilden eine modular austauschbare Funktionseinheit. Abstützelement und Einspritzeinheit mit ihrem Einspritzantrieb bilden ebenfalls eine modular austauschbare Funktionseinheit. Das Aufnahmeelement ist auf die Führungselemente einfach aufschiebbar. Das Abstützelement wird mit den Führungselemente verbunden, indem es vorzugsweise auf die Führungselemente aufgesteckt und dort lösbar fixiert wird. Gleichzeitig bildet sich damit ein Kraftrahmen aus Aufnahmegehäuse, Führungselementen und Abstützelement aus. Durch diesen vorteilhaften konstruktiven Aufbau können antriebsgleiche oder antriebsverschiedene Dosiereinheiten und Einspritzeinheiten der Funktionseinheiten auf einfachem Wege ausgetauscht werden.

Vorzugsweise umfasst für eine vorteilhaft zügige Umsetzung eines Austauschs oder einer Montage der Bausatz Schnellkopplungssysteme an den Schnittstellen.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines Ausführungsbeispiels näher erläutert. Es zeigen:
- Fig. 1: eine perspektivische Ansicht eines Teils einer Spritzgießmaschine, mit einem Unterbau und darauf angeordneter Spritzgießeinheit,
- Fig. 2: eine Seitenansicht der Spritzgießeinheit gemäß Fig. 1,
- Fig. 3 - 6: perspektivische Ansichten gemäß Fig. 1 mit vergrößerten teilweise geschnittenen Ansichten verschiedener Ausführungsformen von Schnellkupplungen für austauschbare Funktionseinheiten der Spritzgießeinheit,
- Fig. 7: eine Darstellung der Spritzgießeinheit mit modular austauschbaren Funktionseinheiten,
- Fig. 8: eine Darstellung eines Bausatzes für eine Spritzgießeinheit,
- Fig. 9: eine perspektivische Ansicht einer weiteren Ausführungsform einer Schnellkupplung.

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

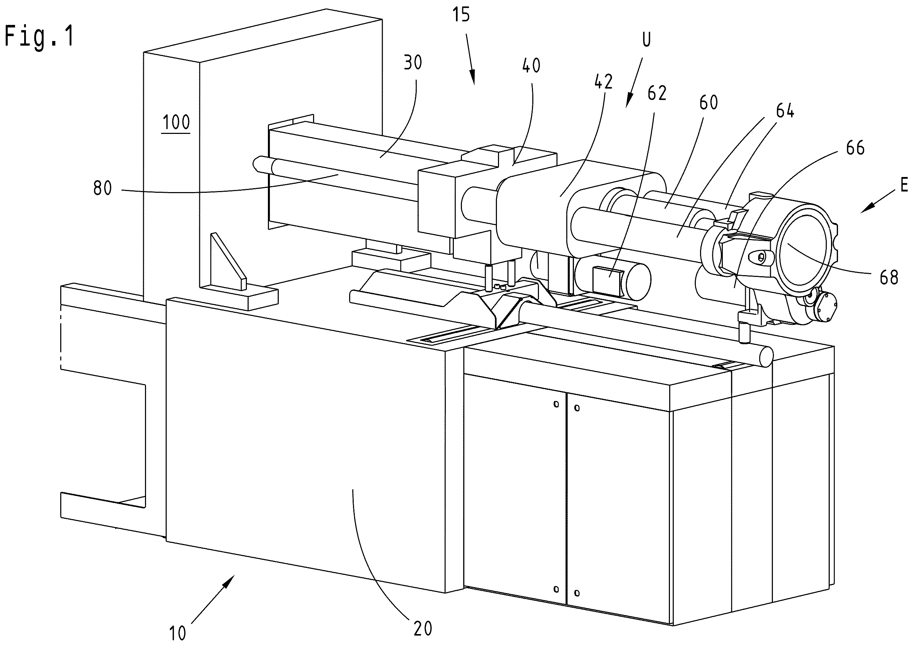

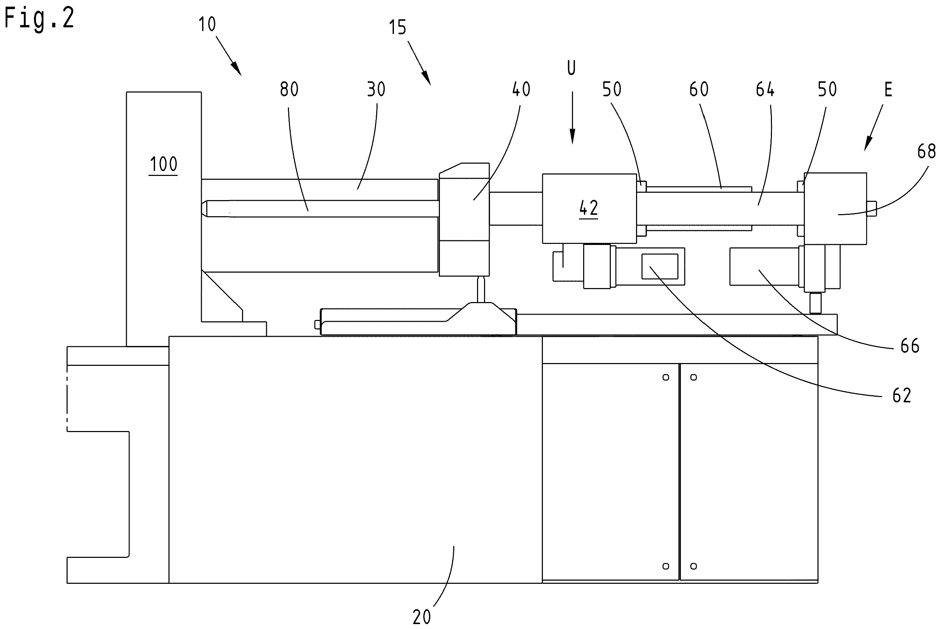

Fig. 1 und 2 zeigen eine perspektivische Ansicht bzw. eine Seitenansicht eines Teils einer Spritzgießmaschine. Erkennbar ist die auf einem Unterbau 20 wie einem Maschinenfuß oder einem Maschinenständer angeordnete Spritzgießeinheit 15, die an einem stationären Formträger 100 anliegt. Auf der zeichnerisch nicht dargestellten linken Seite schließt sich die Formschließeinheit an.

Aufbau und Betrieb einer Spritzgießmaschine sind dem Fachmann grundsätzlich bekannt. Der Spritzgießmaschine 10 werden Kunststoffe oder andere plastifizierbare Materialien zugeführt, die in einem Plastifizierzylinder 30 gemischt, plastifiziert und homogenisiert werden. Hierzu ist im Plastifizierzylinder 30 eine zeichnerisch nicht dargestellte Förderschnecke oder ein anderes geeignetes Fördermittel vorgesehen. Während des Plastifizierungsvorgangs wird im Falle einer Förderschnecke diese durch eine Dosiereinheit U mit einen Dosierantrieb 60 rotiert, wobei vor dem Fördermittel bzw. der Förderschnecke plastifiziertes Material aufdosiert wird. Im Anschluss wird durch eine Axialbewegung des Fördermittels, die durch wenigstens eine Einspritzeinheit E mit einem Einspritzantrieb 66 erfolgt, das plastifizierte Material in einen Formhohlraum einer zeichnerisch nicht dargestellten Spritzgießform eingespritzt, die sich in Figur 1 auf der linken Seite auf der Rückseite des stationären Formträgers 100 befinden würde. In diesem Moment ist die Spritzgießform durch die Formschließeinheit geschlossen. Sobald das eingespritzte plastifizierte Material im Formhohlraum ausgehärtet ist, wird mittels der Formschließeinheit die Spritzgießform wieder geöffnet, sodass das fertige Spritzteil entnommen werden kann. Dieser Prozess erfolgt zyklisch.

In Fig. 1 ist etwa mittig in der Spritzgießeinheit ein Aufnahmegehäuse 40 vorgesehen, das über eine Abstützung auf einem Unterbau 20 abgestützt ist. In den Figuren links vom Aufnahmegehäuse 40 ist der Plastifizierzylinder 30 angeordnet und liegt mit einer zeichnerisch nicht dargestellten Düse am stationären Formträger 100 an. Das Aufnahmegehäuse 40 ist über zwei Holme bzw. Führungssäulen als Führungssystem 80 mit dem stationären Formträger 100 lösbar verbunden. Im Ausführungsbeispiel bilden das Führungssystem 80 und die Führungselemente 64 je ein Teil auf jeder Seite der Spritzgießeinheit 15. Das Führungssystem 80 und die Führungselemente 64 können aber auch gesonderte Bauteile sein.

An der vom stationären Träger abgewandten Seite des Aufnahmegehäuse 40 ist in den Figuren auf der rechten Seite ein Aufnahmeelement 42 vorgesehen, das auf den Führungselemente 64 axial beweglich geführt ist. Dem Aufnahmeelement 42 ist eine Dosiereinheit U zugeordnet, die dazu eingerichtet ist, plastifiziertes Material zum Einspritzen zu dosieren. Sie wird von einem Dosierantrieb 62 angetrieben, mit dem sie wirkverbunden ist. Der Antrieb der Dosiereinheit U kann bei gleicher technischer Ausprägung z.B. elektrisch oder hydraulisch oder auf geeignete andere Weise erfolgen. Grundsätzlich können auch mehrere Dosiereinheiten vorgesehen sein. Der mit der Dosiereinheit U wirkverbundene Dosierantrieb 62 überträgt eine Rotation an das Fördermittel.

Auf der rechten Seite des Aufnahmeelements 42 ist ein Übertragungselement 60 zu erkennen, dass die Axialbewegung der Einspritzeinheit E auf das Aufnahmeelement 42 überträgt. Auf im Ausführungsbeispiel beiden Seiten des Aufnahmeelements 42 sind Führungselemente 64 angeordnet, die am Aufnahmegehäuse 40 gelagert sind.

Die mindestens eine Einspritzeinheit E ist dazu eingerichtet, durch eine an den Führungselementen 64 geführte Axialbewegung plastifiziertes Material einzuspritzen. Sie ist mit einem Einspritzantrieb 66 wirkverbunden ist. Wenigstens ein an der Spritzgießeinheit 15)angeordnetes und mit der Spritzgießeinheit 15 bewegbares Abstützelement 68 stützt ebenfalls die Spritzgießeinheit 15 auf dem Unterbau 20 wie einem Maschinenständer ab.

Um bedarfsweise einen Austausch oder eine Montage der Dosiereinheit und/oder der Einspritzeinheit schnell und einfach zu ermöglichen bilden Aufnahmeelement 42 und die Dosiereinheit U mit ihrem Dosierantrieb 62 eine modular austauschbare Funktionseinheit und Abstützelement 68 und Einspritzeinheit E mit ihrem Einspritzantrieb 66 ebenfalls eine modular austauschbare Funktionseinheit, die mit wenigen Handgriffen an einer Montageplattform zu befestigen sind. Diese Montageplattform umfasst zunächst das Aufnahmegehäuse 40 und die Führungselemente 64. Auf die Führungselemente 64 kann dann auf der vom Aufnahmegehäuse 40 abgewandten Seite das Aufnahmeelement 42 aufgeschoben werden und ist dadurch axial beweglich auf den Führungselementen 64 geführt.

Die Montageplattform, umfassend Aufnahmegehäuse 40 und Führungselemente 64, wird am dem Plastifizierzylinder 30 gegenüberliegenden Ende der Führungselemente 64 durch das Abstützelement 68 zu einen Kraftrahmen geschlossen. Das Abstützelement ist aber gleichzeitig Teil einer die Einspritzeinheit E umfassenden, modular austauschbaren Funktionseinheit, so dass damit auch die Einspritzeinheit positioniert wird. Das Abstützelement 68 ist lösbar befestigt und dazu eingerichtet, die Spritzgießeinheit 15 auf dem Unterbau 20 abzustützen. Durch diese konstruktive Gestaltung lassen sich antriebsgleiche oder antriebsverschiedene Dosiereinheiten U und Einspritzeinheiten E der modular austauschbaren Funktionseinheiten an Schnittstellen 50 und an als vorzugsweise ebenfalls als Schnittstellen 50 ausgebildeten Schnellkopplungssystemen 70 der Spritzgießeinheit gut und schnell anbinden.

. Beim Einspritzantrieb 66 kann es sich bei einer hydraulischen Lösung um einen zentralen hydraulischen Einspritzzylinder handeln. Bei einer elektrischen Lösung ist z.B. ein Getriebe vorgesehen, um die elektrische Drehbewegung des Einspritzantriebs 66 mittels eines Übertragungselements 60 in eine lineare Bewegung umzuwandeln. Andere Antriebsarten und Ausführungsformen sind möglich. Ebenso ist auch eine andere Anordnung der Einspritzeinheit E relativ zur Dosiereinheit U möglich.

Das hintere Abstützelement 68, das bei einer elektrischen Ausgestaltung ein Getriebe umfasst und bei einer hydraulischen Ausgestaltung als Zylinderaufnahme ausgebildet sein kann - andere Wirkprinzipien sind ebenso möglich - ist im Ausführungsbeispiel so ausgebildet, dass über eine im Wesentlichen einheitliche Verbindungstechnik der Schnittstelle 50 (Fig. 2) je nach Bedarf die eine oder andere technische Lösung als Antriebskonzept angeschlossen werden kann.

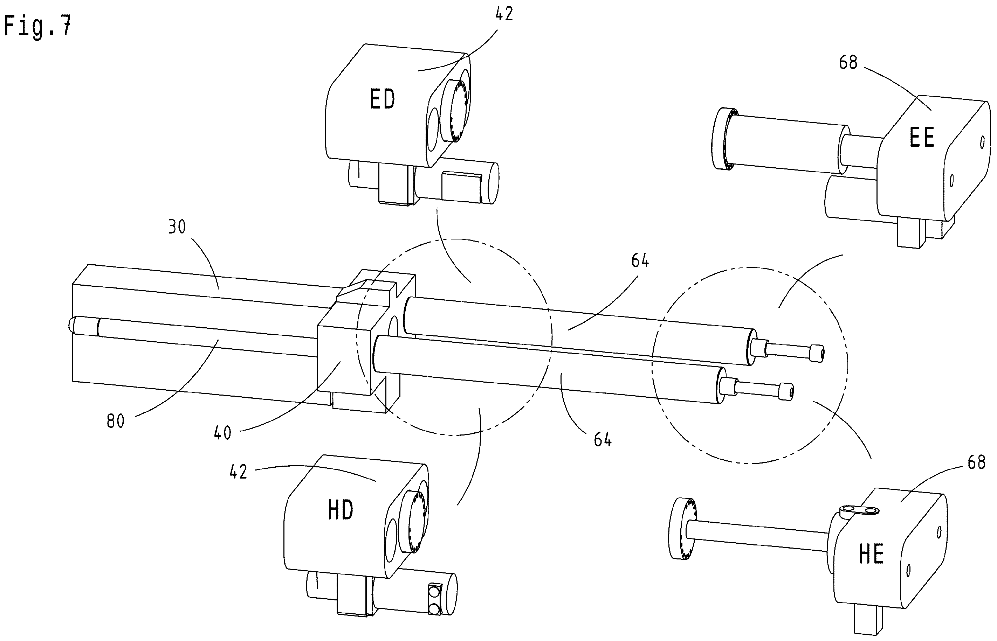

In Fig. 2 ist erkennbar, dass das Aufnahmegehäuse 40 und das Abstützelement 68 jeweils mindestens eine Schnittstelle 50 aufweisen, die dazu eingerichtet ist, Dosiereinheit U und Einspritzeinheit E als modular austauschbare Funktionseinheiten mit der Spritzgießeinheit 15 gesondert zu verbinden. Dosiereinheit und Einspritzeinheit können dabei antriebsgleich als auch antriebsverschieden ausgebildet sein. Dies hat keinen Einfluss auf die Ausgestaltung der Schnittstellen, da diese hierfür vorbereitet sind. Erkennbar ist in Fig. 2 zudem, dass auch Dosierantrieb 62 und Einspritzantrieb 66 voneinander gesondert angeordnet sind. Dadurch ist es vorteilhaft problemlos möglich, die Einheiten getrennt voneinander der Spritzgießeinheit zuzuführen bzw. bedarfsweise auszutauschen, wie z.B. in Fig. 7 zu erkennen.

Die Führungselemente 64 dienen als einheitliche Aufnahme für die verschiedenen Funktionseinheiten unabhängig vom jeweiligen Wirkprinzip. Unabhängig vom Antriebskonzept bleibt damit die Führung als auch die Schnittstelle für das Ankoppeln der jeweiligen Funktion identisch.

Vorzugsweise ist die Verbindungstechnik als Schnellwechselsystem 70 in Form eines Bajonettverschlusses, einer zentralen Mutter/Schraubenverbindung oder einer mehrteiligen Schraubenverbindung oder eines Gewindespannring 94 mit axialem Anschraublochkreis ausgeführt, wie im Folgenden noch näher erläutert wird. Dies ermöglicht neben dem einfachen und schnellen Montageprozess auch im Servicefall einen effizienten und kundenfreundlichen Austausch von Komponenten, wobei vorteilhaft die gesamte Funktionseinheit getauscht werden kann, um eine schnelle Verfügbarkeit der Maschine für den Kunden zu gewährleisten.

Durch die Vereinheitlichung der Schnittstellen und die damit gegebene Fügebasis, in der verschiedene Antriebskonzepte an Aufnahmegehäuse 40 und Abstützelement 68 leicht einfügbar sind, lässt sich im Montageprozess trotz mehrerer unterschiedlicher Varianten eine effiziente Montage auf einer Montagelinie realisieren, d.h., es kann im Fügeprozess individuell auf Kundenanforderungen eingegangen werden. Damit kann auch je nach den jeweiligen Anforderungen während eines Lebenszyklus einer Maschine eine einfache Umrüstung beim Kunden von Funktionsmodulen auch unterschiedlicher Antriebsart erfolgen. Dies wird durch die konsequente Umsetzung des Modulgedankens und der einheitlichen Schnittstellenausprägung nicht nur bei der Spritzgießeinheit 15 sondern auch bei der Antriebstechnik möglich.

Vorzugsweise sind die austauschbaren Funktionseinheiten auf Grundlage wenigstens eines der Wirkprinzipien hydraulisch, pneumatisch, elektromechanisch, Linearantrieb oder hybrid betätigbar.

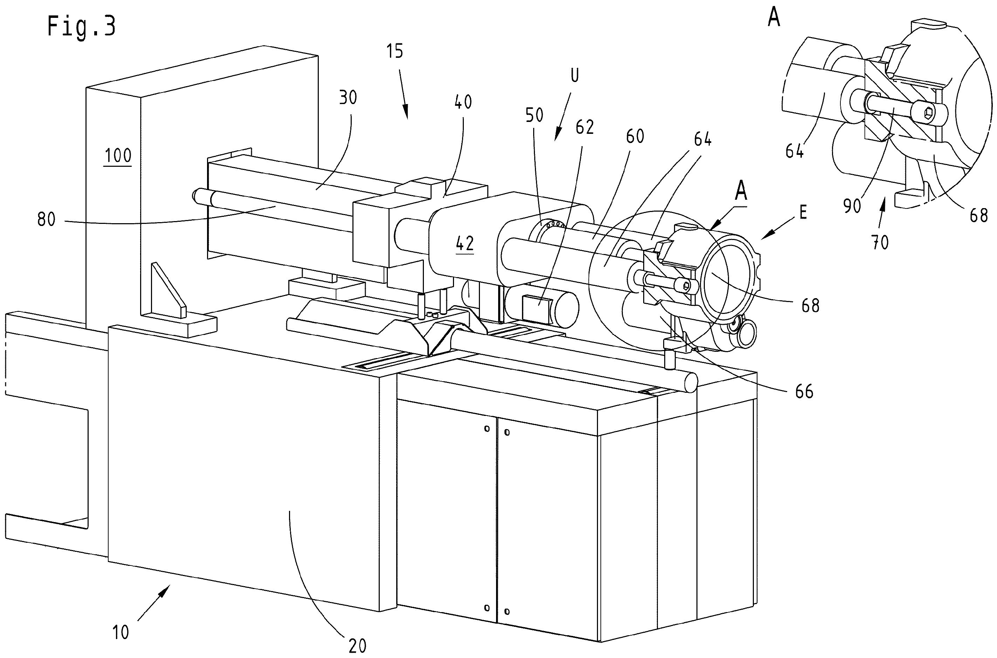

Als Schnellkopplungssystem 70, das vorzugsweise ebenfalls wie eine Schnittstelle 50 ausgebildet ist, kommt zunächst, wie in Fig. 3 im Detail A zu erkennen, eine zentrale Schraube 90 in Betracht, die das Abstützelement 68 durchgreift und im Ausführungsbeispiel an den Führungselementen 64 befestigt ist. Die Führungselemente weisen an ihren Enden die zentrale Schraube 90 auf.

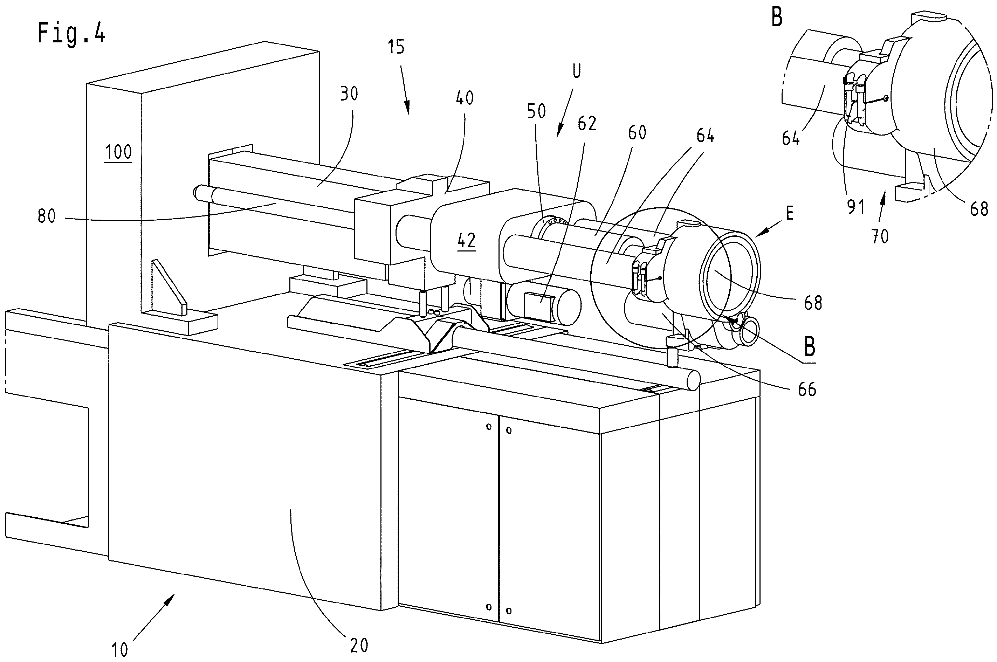

Figur 4 zeigt eine alternative Ausführungsform eines Schnellkopplungssystems 70 im Detail B, bei dem an der gleichen Stelle am Aufnahmeelement 68 eine Klemmung über eine geschlitzte Gussbohrung 91 erfolgt. Wird die Klemmung geöffnet, kann in diesem Fall die die Einspritzeinheit E umfassende, modular austauschbare Funktionseinheit leicht angenommen werden.

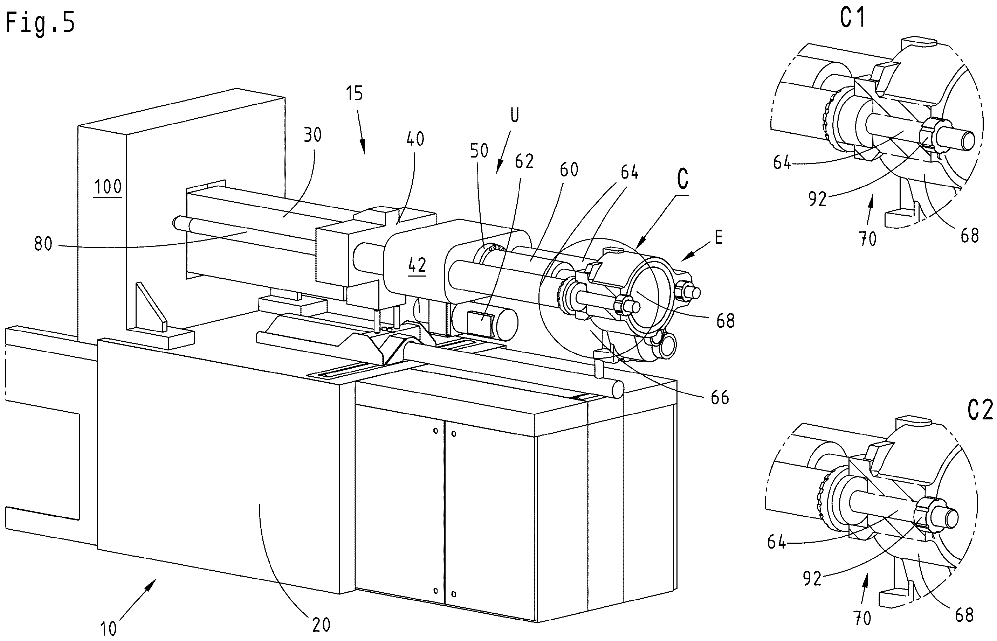

Fig. 5 zeigt im Detail C eine zentrale Mutter 92 mit einem Gewindeeinstellring, die eine Schnellkopplung mit weiteren Vorteilen verbindet. Einerseits lassen sich über die einstellbare Gewindeanschlagmutter im Montageprozess Einstellfunktionen mit hoher Genauigkeit hinsichtlich der Parallelität - in diesem Fall der Einspritzeinheit E - erreichen, ohne die Fertigungsgenauigkeit und damit die Herstellungskosten signifikant zu erhöhen. Vorzugsweise lässt sich gemäß den Details C1 und C2 die Einstellsystematik auch technisch so ausführen, dass ohne großen, insbesondere finanziellen Mehraufwand eine variable Erhöhung des Einspritzhubs realisiert werden kann, in dem durch die Doppelmuttervariante in gewissem Umfang der Einspritzhub verändert werden kann. Durch einen Vergleich der Darstellung im Detail C1 mit der im Detail C2 ist zu erkennen, dass in Detail C2 der verbleibende Gewindegang rechts von der zentralen Mutter 92 kleiner ist als im Detail C1.

Das ist bei sonst gleichen Maßen gleichbedeutend mit einem höheren Einspritzhub. Dies führt zu einer Leistungserhöhung bzw. Erhöhung des Massedurchsatzes ohne weitere signifikante Kosten.

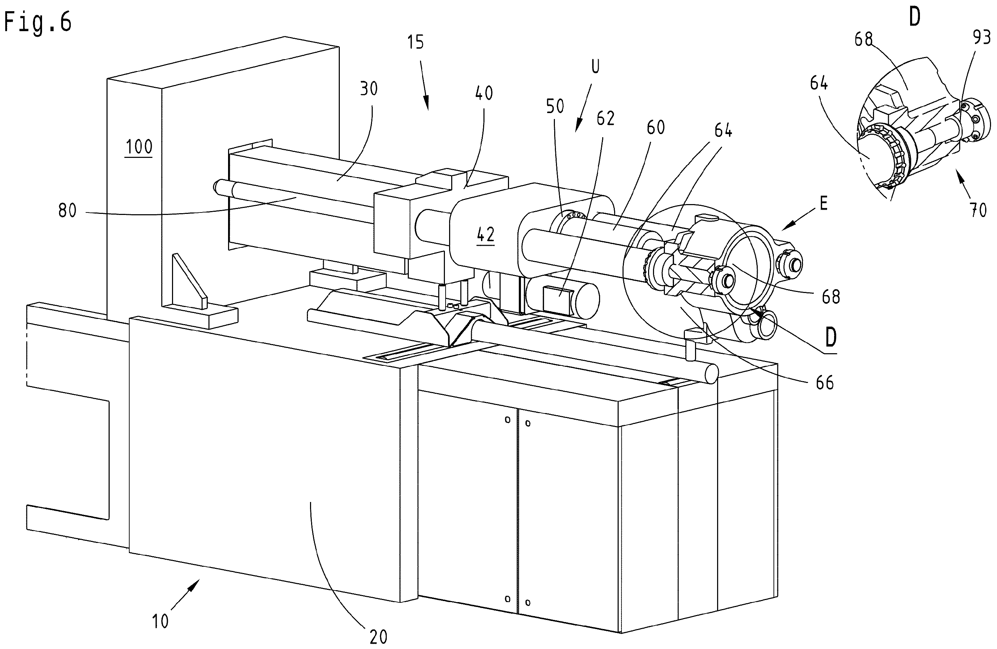

In Fig. 6 ist im Detail D eine Schnellkopplung 70 mit einer "Igel Klemmung" dargestellt. Dabei werden die Kräfte zunächst auf einen Gewindeeinstellring 93 übertragen, der dann über eine Vielzahl von im Gebrauchszustand auf Druck beanspruchten Verbindungselementen mit dem Abstützelement 68 verbunden ist. Dies führt vorteilhaft zu einer guten Krafteinleitung bei schonender Beanspruchung der Verbindungselemente.

Die Schnittstellen 50, 70 sind vorzugsweise so ausgestaltet, dass eine rotatorische und/oder translatorische Bewegung von den zugehörigen Antriebseinheiten auf die entsprechende Funktionseinheit übertragbar ist. So kann z.B. eine Antriebskraft einer rotatorischen und/oder translatorischen Bewegung mittels einer Kolben-Zylinder-Einheit und/oder einer Kugelgewindespindel erzeugt werden.

Im Anwendungsbereich einer Spritzgießmaschine und damit im konkreten Ausführungsbeispiel ist die Dosiereinheit U dazu eingerichtet, das Plastifizieren und Fördern des plastifizierten Materials in einem Plastifizierzylinder mit einer Förderschnecke auszuführen. Die Einspritzeinheit E ist dazu eingerichtet, das Einspritzen des plastifizierten Materials in einen Formhohlraum einer Spritzgießform, aufgenommen in der Spritzgießmaschine auszuführen. Dosiereinheit U und Einspritzeinheit E sind mittels der Schnittstellen 50, 70 hierzu miteinander in Wirkverbindung bringbar.

Vorzugsweise wird eine derart ausgestaltete Spritzgießeinheit an einer Spritzgießmaschine zur Herstellung eines dreidimensionalen Gegenstands aus Kunststoff oder anderen plastifizierbaren Materialien eingesetzt, die einen Unterbau 20 zur Aufnahme und Abstützung der Spritzgießeinheit umfasst.

Zur Lösung der Aufgabe lässt sich so auch ein Bausatz für eine Spritzgießeinheit 15 zur Verarbeitung von Kunststoffen oder anderer plastifizierbarer Materialien schaffen, die zum Einspritzen von plastifiziertem Material in einen Formhohlraum zur Herstellung von Spritzteilen eingerichtet ist. Solch ein Bausatz umfasst:
- wenigstens ein Aufnahmegehäuse 40, eingerichtet zum Aufnehmen eines Plastifizierzylinders 30 und zum Abstützen der Spritzgießeinheit 15 auf einem Unterbau 20,
- mehrere Führungselemente 64,
- eine Vielzahl von Aufnahmeelementen 42, wobei das Aufnahmeelement an den Führungselementen 64 axial beweglich lagerbar ist,
- eine Vielzahl von Dosiereinheiten U, die dazu eingerichtet sind, plastifiziertes Material zum Einspritzen zu dosieren, mit zugehörigem Dosierantrieb 62,
- eine Vielzahl von Einspritzeinheiten E, die dazu eingerichtet sind, plastifiziertes Material einzuspritzen, mit zugehörigem Einspritzantrieb 66,
- eine Vielzahl von Abstützelementen 68, die zum Abstützen der Spritzgießeinheit 15 eingerichtet sind.

Dabei bilden das Aufnahmeelement 42 und die Dosiereinheit U mit ihrem Dosierantrieb 62 eine modular austauschbare Funktionseinheit. Ebenso bilden das Abstützelement 68 und die Einspritzeinheit E mit ihrem Einspritzantrieb 66 eine modular austauschbare Funktionseinheit.

Zum Zusammenbau des Bausatzes ist das Aufnahmeelement 42 auf die Führungselemente 64 aufschiebbar und damit auf den Führungselementen axial beweglich. Das Aufnahmegehäuse 40 und die Führungselemente 64 bilden zusammen mit dem am dem Plastifizierzylinder 30 gegenüberliegenden Ende der Führungselementen 64 lösbar befestigbaren Abstützelement 68 einen Kraftrahmen. In bzw. an diesem Kraftrahmen sind antriebsgleiche oder antriebsverschiedene Dosiereinheiten U und Einspritzeinheiten E der modular austauschbaren Funktionseinheiten vorgesehen und wie erläutert an den Schnittstellen 50 angeordnet bzw. befestigt.

Vorzugsweise umfasst der Bausatz Schnellkopplungssysteme 70, die an den Schnittstellen 50 anordenbar sind und vorzugsweise ebenfalls als Schnittstellen 50 ausgebildet sind.

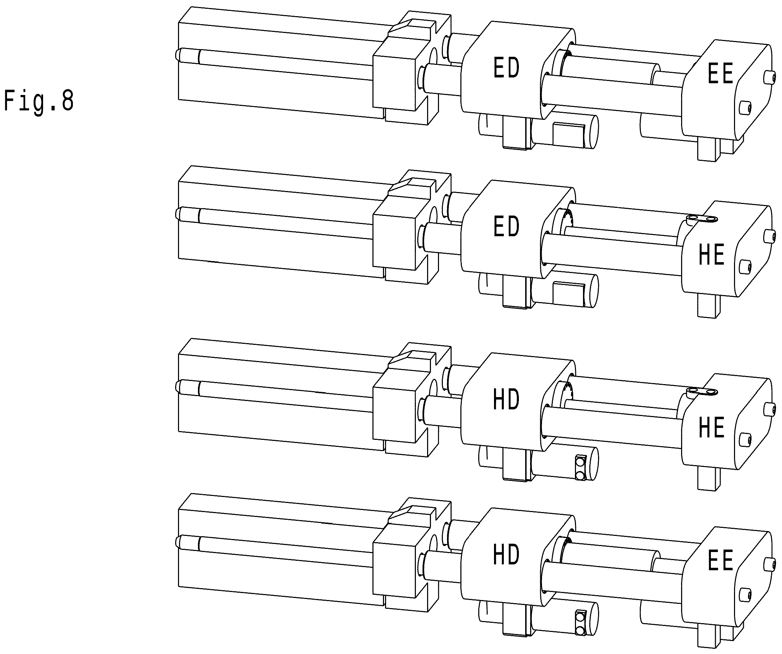

Dies zeigen auch die Fig. 7 und 8. Fig. 7 zeigt in der Mitte das Aufnahmegehäuse 40 mit auf der einen (linken) Seite angeordnetem Plastifizierzylinder 30 und den Führungselementen 64 auf der anderen Seite. Im linken eingekreisten Bereich können nun verschiedene Aufnahmeelemente 42 (oben ED, unten HD) angebracht werden, die dazu von rechts auf die Führungselemente 64 aufgeschoben werden. An den Enden der Führungselemente im rechten eingekreisten Bereich können verschiedene Abstützelemente 68 (oben EE, unten HE) befestigt werden. Die verwendeten Abkürzungen bedeuten:
- ED: elektromechanisches Dosieren
- HD: hydraulisches Dosieren
- EE: elektromechanisches Einspritzen
- HD: hydraulisches Einspritzen

Das Ergebnis zeigt Fig. 8, in der zur verständlicheren Darstellung nur diese Abkürzungen angegeben sind. Je nach Ausgestaltung kann so eine vollelektrische Spritzgießeinheit (ED, EE) gemäß der obersten Darstellung aufgebaut werden. Gemäß der zweiten Darstellung von oben kann aber auch das Dosieren elektromechanisch und das Einspritzen hydraulisch erfolgen (ED, HE). Die dritte Darstellung von oben zeigt eine vollhydraulische Ausgestaltung mit hydraulischen Dosieren als auch Einspritzen (HD, HE). Die unterste Darstellung schließlich zeigt eine Lösung mit einem hydraulischen Dosieren und einem elektromechanischen Einspritzen (HD, EE). Mit weiteren Antriebsarten sind weitere Alternativen möglich.

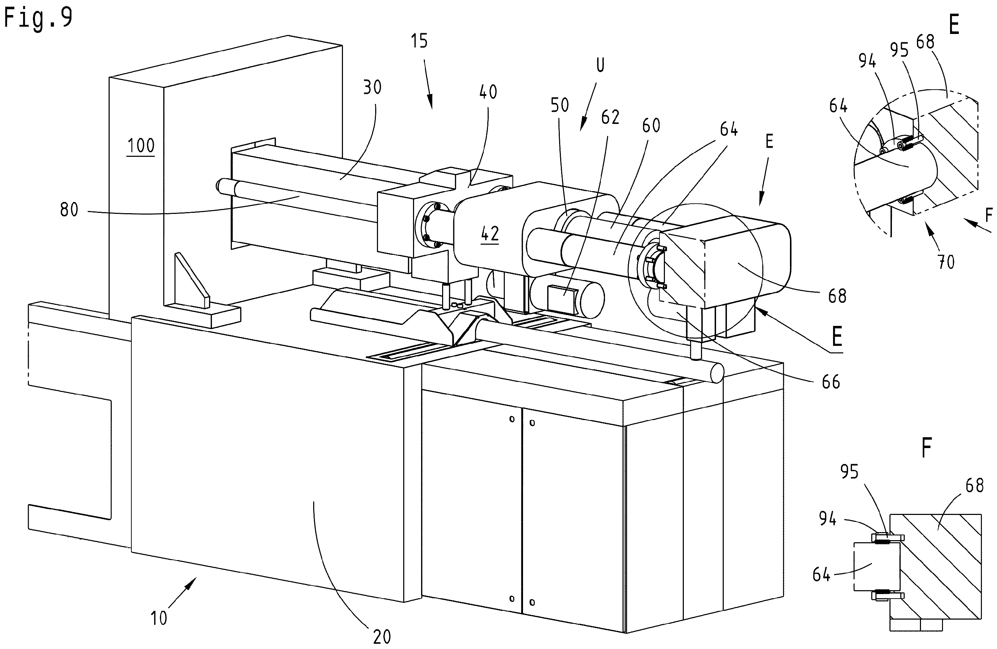

Fig. 9 zeigt bei sonst gleichem Aufbau der Spritzgießeinheit 15 mit der Ansicht E und dem Schnitt F eine weitere Ausführungsform eines vorzugsweise ebenfalls als Schnittstelle verwendbaren Schnellkopplungssystems 70 mit Außengewinde und axial verschraubbarem Gewindespannring 94. Neben fertigungstechnischen Vorteilen kann der Gewindespannring 94 einfach mit einem Innengewinde auf das Außengewinde am Führungselement 64 aufgeschraubt werden und auf das Lochbild in den Verbindungsbauteilen (Aufnahmegehäuse 40, Abstützkörper 68) angepasst werden. Über die axiale Verschraubung 95 können sehr einfach die erforderlichen Verbindungskräfte aufgebracht werden, ohne dass auf Sonderwerkzeug zurückgegriffen werden muss. Dieses Verbindungssystem kann über mehrere Baugrößen hinweg identisch ausgeführt werden.

### Bezugszeichenliste

- 10: Spritzgießmaschine
- 15: Spritzgießeinheit
- 20: Maschinenbasis
- 30: Plastifiziereinheit
- 40: Aufnahmegehäuse
- 42: Aufnahmeelement
- 50: Schnittstelle
- 60: Übertragungselement
- 62: Dosierantrieb
- 64: Führungselement
- 66: Einspritzantrieb
- 68: Abstützelement
- 70: Schnellkopplungssystem
- 80: Führungssystem
- 90: zentrale Schraube
- 91: Klemmung über geschlitzte Gussbohrung
- 92: zentrale Mutter mit Gewindeeinstellring
- 93: Igelklemmung mit Gewindeeinstellring
- 94: Gewindespannring
- 95: Verschraubung
- 100: stationärer Formträger
- E: Einspritzeinheit
- U: Dosiereinheit

## Patentansprüche

1. Spritzgießeinheit (15) zur Verarbeitung von Kunststoffen oder anderer plastifizierbarer Materialien, eingerichtet zum Einspritzen von plastifiziertem Material in einen Formhohlraum zur Herstellung von Spritzteilen, umfassend
- ein Aufnahmegehäuse (40), eingerichtet zum Aufnehmen eines Plastifizierzylinders (30) und zum Abstützen der Spritzgießeinheit (15) auf einem Unterbau (20),
- mehreren am Aufnahmegehäuse (40) gelagerten Führungselementen (64),
- mindestens einem Aufnahmeelement (42), das an den Führungselementen (64) axial beweglich gelagert ist,
- mindestens eine Dosiereinheit (U), die am Aufnahmeelement (42) gelagert ist und dazu eingerichtet ist, plastifiziertes Material zum Einspritzen zu dosieren, und die mit einem Dosierantrieb (62) wirkverbunden ist,
- mindestens eine Einspritzeinheit (E), die dazu eingerichtet ist, durch eine an den Führungselementen (64) geführte Axialbewegung plastifiziertes Material einzuspritzen, und die mit einem Einspritzantrieb (66) wirkverbunden ist,
- wenigstens ein an der Spritzgießeinheit (15) angeordnetes und mit der Spritzgießeinheit (15) bewegbares Abstützelement (68), das zum Abstützen der Spritzgießeinheit (15) auf dem Unterbau (20) eingerichtet ist,
**dadurch gekennzeichnet, dass**
- das Aufnahmeelement (42) und die Dosiereinheit (U) mit ihrem Dosierantrieb (62) eine modular austauschbare Funktionseinheit bilden,
- das Abstützelement (68) und die Einspritzeinheit (E) mit ihrem Einspritzantrieb (66) ebenfalls eine modular austauschbare Funktionseinheit bilden,
- das Aufnahmegehäuse (40) und die Führungselemente (64) eine Montageplattform bilden, wobei das Aufnahmeelement (42) auf die Führungselemente (64) aufgeschoben ist,
- die Montageplattform und das Abstützelement (68) einen Kraftrahmen bilden,
- das Abstützelement (68) an einem dem Plastifizierzylinder (30) gegenüberliegenden Ende der Führungselemente (64) lösbar befestigt ist und dazu eingerichtet ist, die Spritzgießeinheit (15) auf dem Unterbau (20) abzustützen,
- wobei antriebsgleiche oder antriebsverschiedene Dosiereinheiten (U) und Einspritzeinheiten (E) der modular austauschbaren Funktionseinheiten an Schnittstellen (50, 70) der Spritzgießeinheit angebunden sind.

2. Spritzgießeinheit nach Anspruch 1, **dadurch gekennzeichnet, dass** die modular austauschbare Funktionseinheit mittels eines vorzugsweise ebenfalls als Schnittstelle (50) ausgebildeten Schnellkopplungssystems (70) an der mindestens einen Schnittstelle (50) wirkverbunden ist.

3. Spritzgießeinheit nach Anspruch 1 oder 2, **dadurch gekennzeichnet, dass** die austauschbaren Funktionseinheiten auf Basis wenigstens eines der Wirkprinzipien hydraulisch, pneumatisch, elektromechanisch, Linearantrieb oder hybrid betätigbar sind.

4. Spritzgießeinheit nach einem der Ansprüche 2 oder 3, **dadurch gekennzeichnet, dass** das Schnellkopplungssystem (70) eine zentrale Schraube (90), eine Klemmung über eine geschlitzte Gussbohrung (91), eine zentrale Mutter mit Gewindeeinstellring (92), eine Vielzahl von im Gebrauchszustand auf Druck beanspruchten Verbindungselementen mit Gewindeeinstellring (93), einen Bajonettverschluss oder einen Gewindespannring (94) mit axialem Anschraublochkreis umfasst.

5. Spritzgießeinheit nach einem der vorhergehenden Ansprüche, **dadurch gekennzeichnet, dass** mittels der Schnittstellen (50, 70) eine rotatorische und/oder translatorische Bewegung übertragbar ist.

6. Spritzgießeinheit nach Anspruch 5, **dadurch gekennzeichnet, dass** eine Antriebskraft der rotatorischen und/oder translatorischen Bewegung mittels einer Kolben-Zylinder-Einheit und/oder einer elektromechanischen Einheit wie einer Kugelgewindespindel, einer Bewegungsspindel oder einer Zahnstangenlösung erzeugbar ist.

7. Spritzgießeinheit nach einem der vorhergehenden Ansprüche, **dadurch gekennzeichnet, dass** die Dosiereinheit (U) eingerichtet ist, das Plastifizieren und Fördern des plastifizierten Materials im Plastifizierzylinder (30) mit einem Fördermittel auszuführen, und
dass die Einspritzeinheit (E) eingerichtet ist, das Einspritzen des plastifizierten Materials in einen Formhohlraum einer Spritzgießform, aufgenommen in einer Spritzgießmaschine (10) auszuführen, wobei die Dosiereinheit (U) und die Einspritzeinheit (E) mittels der Schnittstellen (50, 70) in Wirkverbindung miteinander bringbar sind.

8. Spritzgießeinheit nach einem der vorhergehenden Ansprüche, **dadurch gekennzeichnet, dass** an der dem Abstützelement (68) zugeordneten Schnittstelle (50, 70) der Einspritzeinheit (E) eine Gewindeanschlagmutter im Doppelmutterprinzip vorgesehen ist, die dazu eingerichtet ist, den Einspritzhub zu verändern.

9. Spritzgießmaschine (10) zur Herstellung eines dreidimensionalen Gegenstands aus Kunststoff oder anderen plastifizierbaren Materialien umfassend mindestens einen Unterbau (20) zur Aufnahme und Abstützung einer Spritzgießeinheit nach einem der vorhergehenden Ansprüche.

10. Bausatz für eine Spritzgießeinheit (15) zur Verarbeitung von Kunststoffen oder anderer plastifizierbarer Materialien, eingerichtet zum Einspritzen von plastifiziertem Material in einen Formhohlraum zur Herstellung von Spritzteilen, wobei der Bausatz umfasst:
- wenigstens ein Aufnahmegehäuse (40), eingerichtet zum Aufnehmen eines Plastifizierzylinders (30) und zum Abstützen der Spritzgießeinheit (15) auf einem Unterbau,
- mehrere Führungselemente (64),
- eine Vielzahl von Aufnahmeelementen (42), wobei das Aufnahmeelement an den Führungselementen (64) axial beweglich lagerbar ist,
- eine Vielzahl von Dosiereinheiten (U), die dazu eingerichtet sind, plastifiziertes Material zum Einspritzen zu dosieren, mit zugehörigem Dosierantrieb,
- eine Vielzahl von Einspritzeinheiten (E), die dazu eingerichtet sind, plastifiziertes Material einzuspritzen, mit zugehörigem Einspritzantrieb (66),
- eine Vielzahl von Abstützelementen (68), die zum Abstützung der Spritzgießeinheit (15) eingerichtet sind,
wobei
- das Aufnahmeelement (42) und die Dosiereinheit (U) mit ihrem Dosierantrieb (62) eine modular austauschbare Funktionseinheit bilden,
- das Abstützelement (68) und die Einspritzeinheit (E) mit ihrem Einspritzantrieb (66) ebenfalls eine modular austauschbare Funktionseinheit bilden,
- das Aufnahmeelement (42) auf die Führungselemente (64) aufschiebbar ist,
- das Aufnahmegehäuse (40) und die Führungselemente (64) zusammen mit dem am dem Plastifizierzylinder (30) gegenüberliegenden Ende der Führungselemente (64) lösbar befestigbaren Abstützelement (68) einen Kraftrahmen bilden,
- antriebsgleiche oder antriebsverschiedene Dosiereinheiten (U) und Einspritzeinheiten (E) der modular austauschbaren Funktionseinheiten vorgesehen sind.

11. Bausatz nach Anspruch 10, **dadurch gekennzeichnet, dass** er als Schnittstellen ausgebildete Schnellkopplungssysteme (70) umfasst, die an den Schnittstellen (50) anordenbar sind.
